(19)

Europäisches Patentamt
European Patent Office
Office européen des brevets

(11) **EP 1 710 654 B1**

(12) **EUROPEAN PATENT SPECIFICATION**

(45) Date of publication and mention
of the grant of the patent:
**18.03.2009  Bulletin 2009/12**

(51) Int Cl.:
***G05D 19/02*** *(2006.01)*

(21) Application number: **05007692.6**

(22) Date of filing: **08.04.2005**

(54) **Method and system for active vibration isolation in automotive vehicles**

Verfahren und Vorrichtung  zur aktiven Schwingungsdämpfung  in Kraftfahrzeugen

Procédé et système d'isolation active des vibrations pour véhicules automobiles

(84) Designated Contracting States:
**DE GB SE**

(43) Date of publication of application:
**11.10.2006  Bulletin 2006/41**

(73) Proprietor: **Ford Global Technologies, LLC
Dearborn, MI 48126 (US)**

(72) Inventor: **Olsson, Claes
411 05 Göteborg (SE)**

(74) Representative: **Hammond, Andrew David et al
Valea AB
Lindholmspiren 5
417 56 Göteborg (SE)**

(56) References cited:
**EP-A- 0 114 757          GB-A- 2 271 535
US-B1- 6 314 353**

• **SHIN J-Y ED - AMERICAN AUTOMATIC CONTROL
COUNCIL INSTITUTE OF ELECTRICAL AND
ELECTRONICS ENGINEERS: "Analysis of linear
parameter varying system models based on
reachable sets" PROCEEDINGS OF THE 2002
AMERICAN CONTROL CONFERENCE. ACC.
ANCHORAGE, AL, MAY 8 - 10, 2002, AMERICAN
CONTROL CONFERENCE, NEW YORK, NY :
IEEE, US, vol. VOL. 1 OF 6, 8 May 2002
(2002-05-08), pages 35-40, XP010597080 ISBN:
0-7803-7298-0**
• **DAE SUNG JOO ET AL: "Nonlinear modeling of
vehicle suspension system" AMERICAN
CONTROL CONFERENCE, 2000. PROCEEDINGS
OF THE 2000 JUNE 28-30, 2000, PISCATAWAY,
NJ, USA,IEEE, vol. 1, 28 June 2000 (2000-06-28),
pages 115-118, XP010518023 ISBN:
0-7803-5519-9**

## Description

## Technical field

The present invention relates to a method for providing active vibration isolation of a non-linear dynamic system in an automotive vehicle in accordance with the preamble of claim 1.

The present invention also relates to a system for providing active vibration isolation of a non-linear dynamic system in an automotive vehicle in accordance with the preamble of claim 4.

## Background of the invention

Adaptive filtering relying on the Filtered-x least mean square (FxLMS) adaptation algorithm has become the most widely used control strategy when dealing with active vibration control. This is described further by B. Widrow and S. D. Stearns, Adaptive Signal Processing, Prentice Hall, 1985.

The inventor of the present invention has made previous attempts at addressing the problem of active vibration control as illustrated by the two references as follows:

The first one, Active Engine Vibration Isolation using Feedback Control. Tekn. Lic. Thesis ISBN = 91-7373-398-9, Division of Automatic Control, Linköping University, Linköping, Sweden, 2002., which relates to a multi-input multi-output feedback controller for engine vibration isolation. However, the non-linear control strategy of using gain-scheduling based on several fixed point controller designs, was insufficient to deal with all relevant system operating points, and;

The second one, Comparative Study of Recursive Parameter Estimation Algorithms with Application to Active Vibration Isolation. Technical Report, Department of Information Technology, Uppsala University, Number 2004-051, November 2004., in which is attempted the use of adaptive feed forward control relying on the "Filtered-x least mean square algorithm"-strategy. However, also this control strategy was found insufficient to deal with all engine operating conditions.

A common problem with the suggested prior art approaches as indicated above is that there are problems with insufficient tracking and instability due to non-linear model perturbations.

## Summary of the invention

One object of the invention is to provide an improved method for providing active vibration isolation of a non-linear dynamic system in an automotive vehicle and in particular a method for providing active vibration isolation of a non-linear dynamic system in an automotive vehicle providing for improved vibration attenuation and sufficient stability margins.

This object is achieved by the method as claimed in claim 1.

Thanks to the provision of steps for:

a) building an implicit, arbitrarily detailed multi-body simulation model of the non-linear dynamic system to be isolated;

b) identifying non-linear elements to be extracted/isolated;

c) modeling the non-linear element as a linear one in parallel with a non-linear parameter dependent element;

d) considering the non-linear parameter dependent element as an 'input' and the parameter as an 'output' and computing a linear analytical model representing this input/output relation;

e) substituting the model 'input' by a corresponding parameter dependent expression utilizing the 'output', yielding a linear parameter varying model of the non linear system suitable for control synthesis; .

f) using the linear parameter varying model of the non linear system for the synthesis of an actuator controller;

g) using the actuator controller to control one or more actuators to generate a respective force output for canceling any vibration induced forces generated by the non-linear dynamic system;
a method for providing active vibration isolation of a non-linear dynamic system in an automotive vehicle having improved vibration attenuation and sufficient stability margins as compared to prior art attempts is provided.

A further object of the invention is to provide an improved system for providing active vibration isolation of a non-linear dynamic system in an automotive vehicle.

This object is achieved by the system as claimed in claim 4.

Thanks to the provision of at least one actuator controller the controller synthesis of which is based on a linear parameter varying model of the non linear system, and at least one associated actuator arranged to act between the non-linear dynamic system and a body of the automotive vehicle, where the at least one actuator controller is arranged to control one or more of the associated actuators to generate a respective force output for canceling any vibration induced forces generated by the non-linear dynamic system a system for providing active vibration isolation of a non-linear dynamic system in an automotive vehicle having improved vibration attenuation and sufficient stability margins as compared to prior art attempts is provided.

Preferred embodiments are listed in the dependent claims.

## Description of drawings

In the following, the invention will be described in greater detail by way of example only with reference to attached drawings, in which

Figs. 1a and 1b are schematic illustrations of a 1-degree of freedom mass/spring system used to describe the LPV-modeling method,

Fig. 2 illustrates schematically a model of a car engine and subframe suspension system,

Fig. 3a is a schematic illustration of force/displacement characteristics of the bushing $B_1$ in the global $x$-direction,

Fig. 3b is a schematic illustration of the static translational stiffness $k(\cdot)$ of the bushing $B_1$ in the global $x$-direction (dashed) and the non-linear function $k(\cdot)$ (solid),

Fig. 4 illustrates schematically a transfer function corresponding to a linearization of the equation of motions relating $u(t)$ and the to total force $F_T(t)$ transmitted to subframe in the global $x$-direction,

Fig. 5a exemplifies schematically $F_T(t)$ corresponding to the non-linear system (6) and the transient engine excitation,

Fig. 5b exemplifies schematically displacement $l(t)$ of the bushing $B_1$ corresponding to [6] (solid), [7] (dashed), and [9] (dash dotted),

Fig. 6 shows $F_T(t)$, $\tilde{F}(t)$, and $\bar{F}_T(t)$ corresponding to a simulation of the response to the transient excitation (answering to figure 5),

Fig. 7 illustrates schematically engine rotational speed for the acceleration and gear shift operation,

Fig. 8 illustrates schematically the time-dependent frequency contents of the $T_x$ torque corresponding to an acceleration and gear shift operation,

Fig. 9 illustrates the total force $F_T(t)$ transmitted to subframe in the global $x$-direction corresponding to a open loop simulation of the response to the transient excitation (answering to Figure 5),

Fig. 10 illustrates the total force $F_T(t)$ transmitted to subframe in the global $x$-direction corresponding to a closed loop simulation (i.e. with control) of the response to the transient excitation (answering to Figure 5),

Fig. 11 illustrates the frequency component corresponding to the 1st engine order of the total force $F_T(t)$ transmitted to subframe in the global $x$-direction corresponding to a simulation of the response to the transient excitation (answering to Figure 5);

Fig. 12 illustrates the frequency component corresponding to the 2nd engine order of the total force $F_T(t)$ transmitted to subframe in the global x-direction corresponding to a simulation of the response to the transient excitation (answering to Figure 5),

Fig. 13 illustrates the frequency component corresponding to the 3rd engine order of the total force $F_T(t)$ transmitted to subframe in the global $x$-direction corresponding to a simulation of the response to the transient excitation (answering to Figure 5).

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

## Description of embodiments

The present invention is based on the insight that active vibration isolation systems, such as e.g. engine vibration isolation systems dealing with all kinds of engine operating conditions, including e.g. the ones corresponding to rapid accelerations, should be based on true non-linear feedback control, utilizing an accurate run-time executable non-linear control object model. The problem of developing a non linear active engine vibration isolation system with near optimal performance for all engine operating conditions, also the ones implying non-linear characteristics due to e.g. the non-linear material stiffness characteristics of the engine mounts, has lead to the present invention, and more specifically the problem of generating the necessary mathematical model of the non-linear system, i.e. the control object, suitable for controller synthesis.

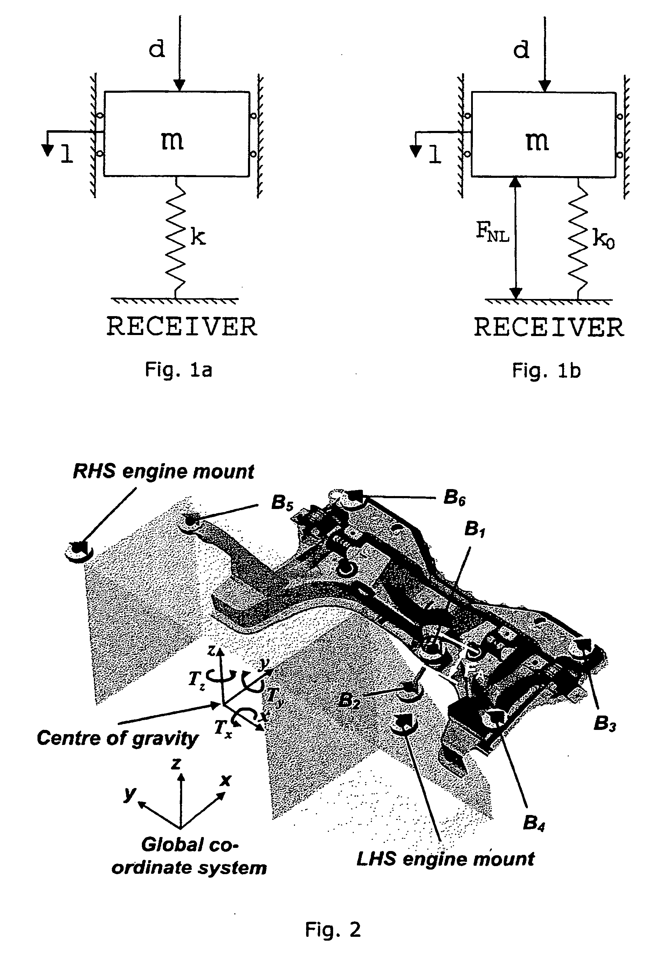

The present invention is based on a multi-body simulation software (MBS-software) (or implicit modeling) based method for generating analytical parameter dependent models of non-linear systems suitable for control synthesis by extracting, or isolating, non-linear elements from a detailed implicit system model. To elucidate the procedure, a simple 1-DOF (degree-of-freedom) mass/spring system shown In Figure 1a is used. The spring has static non-linear stiffness described by the function $k(l(t))$ and the non-linear part of the stiffness is isolated and represented by the force $F_{NL}(t)$.

Since this system could easily be represented on linear parameter varying form (LPV-form) using straight forward algebraic analysis without this method, it is only introduced here to clearly explain the method. The following steps describe the method for generating analytical parameter dependent models of non-linear systems suitable for control synthesis by extracting non-linear elements from a detailed implicit system model :

a) Build an implicit, arbitrarily detailed multi-body simulation model (MBS-model) of the non-linear dynamic system to be isolated/controlled. The dynamics of this system is described by a first order non-linear differential equation as:

$$\dot{x}(t) = g(x(t), d(t)) \qquad [1]$$

where $x(t) \in R^n$ is the state of the system, $d(t) \in R^m$ is an external disturbance/input, and g(.) is a non-linear function;

b) Identify non-linear elements to be extracted/isolated. In figure 1a this is the spring element whose stiffness $k(l(t))$ depends non-linearly on the displacement $l(t)$ of the mass.

c) Model the non-linear element as a linear one in parallel with a non-linear parameter dependent element $\widetilde{E}_{NL}(\theta(t))$ which could be written

$$\widetilde{E}_{NL}(\theta(t))z(t), z(t) = Cx(t) \qquad [2]$$

where the parameter $\theta(t) \in R^p$ is measurable or observable. Notice that the possibly non-linear matrix function $E_{NL}(\theta(t))$ must depend linearly on the state of the system. Returning to the 1-DOF example, the non linear spring in figure 1a is modeled as a linear one with stiffness $k_0$ in parallel to a force $F_{NL}(t)=(k(l(t))-k_0)l(t)$. Therefore, $E_{NL}(\theta(t)) = \widetilde{k}(t)$ where

$$\widetilde{k}(t) = k(l(t)) - k_0$$
$$\theta(t) = l(t) \qquad [3]$$
$$z(t) = l(t)$$

d) Consider the non-linear parameter dependent element $E_{NL}(\theta(t))$ as an 'input' and the signal $z(t)$ in step c [2] as an 'output' and computing (by automatic linearization, e.g. as suggested by V. N. Sohoni and J. Whitesell in "Automatic linearization of constrained dynamical models", published in "Transactions of the ASME", Vol. 108, September 1986.) a linear state-space model representation as

$$\dot{x}(t) = Ax(t) + B_1 E_{NL}(\theta(t))z(t) + B_2 d(t) \qquad [4]$$
$$z(t) = Cx(t)$$

e) Finally, substitute the signal $z(t)$ in the dynamic equation with $z(t) = Cx(t)$.

This yields a LPV-model of the non-linear system described by

$$\dot{x}(t) = A(\theta(t))x(t) + B_2 d(t) \qquad\qquad [5]$$

where $A(\theta(t))=A+B_1 E_{NL}(\theta(t))C$.

Based on the method described above, the present invention constitutes a new solution for high performance active vibration isolation for a non-linear dynamic system in an automotive vehicle such as the car engine and subframe suspension system shown in Figure 2. This solution relies on application of the above method to generate the LPV-model of the system's equations of motions, which enables successful controller design.

The above model is suited for model based control using one or more actuators to generate counter forces arranged to cancel any vibration induced forces. The model is created initially, e.g. when designing the vehicle, and used in order to synthesize an actuator controller, which can be seen as an algorithm for calculating a control signal for the actuator.

In this example embodiment, the method is applied to the non-linear engine suspension system of figure 2 in order to derive an LPV-representation of it. Figure 2 is a model of a car engine and subframe suspension system including rigid body engine and gear box, flexible subframe, rigid body torque-rod, six rubber bushings $B_1$-$B_6$ and two engine mounts, the RHS (right hand side) and the LHS (left hand side) engine mounts.

In the model of the system, see Figure 2, the bushing $B_1$ has non-linear stiffness in the global x-direction and this is the only non-linear element in this model.

The input/output relationship corresponding to the non-linear engine suspension system could be described using a first order non-linear differential equation as

$$\dot{x}(t) = g(x(t)),u(t),d(t))$$
$$F_T(t) = h(x(t))$$
$$\qquad\qquad [6]$$

where $d(t) = [T_x(t)\ T_y(t)\ T_z(t)]^T \in R^3$ and $u(t) \in R^1$ is the actuator input signal, i.e. the controller output signal.

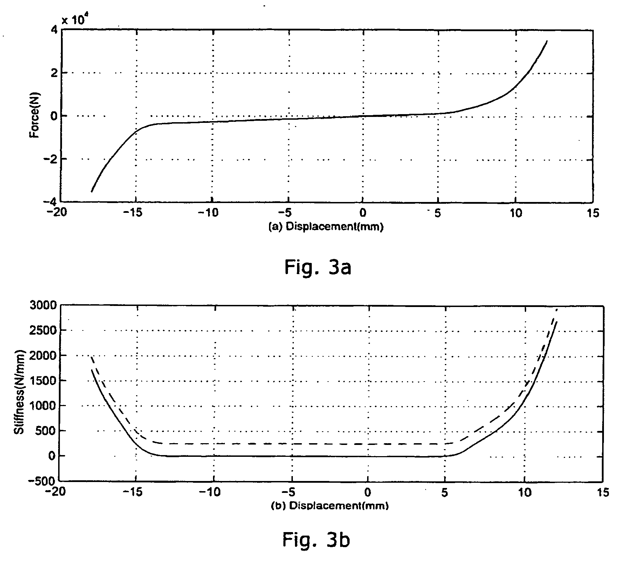

Application of the method to derive an LVP-model of this non-linear system is straightforward in this case since the non-linear element, i.e. the bushing $B_1$, could be treated identical to the non-linear spring in the 1-DOF example system (see Figure 1a). Denote the displacement of the bushing $B_1$ in the global x-direction with $l(t)$. The bushing force in this direction depends on $l(t)$ according to the measurements presented in Figure 3a, which is a schematic illustration of force/displacement characteristics of the bushing $B_1$ in the global x-direction. Alternatively, its x-directional stiffness could be described using a non-linear function $k(l(\cdot))$ shown as a dashed line in Figure 3b, which is a schematic illustration of the static translational stiffness $k(\cdot)$ of the bushing $B_1$ in the global x-direction (dashed) and the non-linear function $\tilde{k}$ $(\cdot)$ (solid).

Keeping the notation [3] from the 1-DOF example, an LVP-model of the system [6] is obtained as

$$\dot{x}(t) = A(\theta(t))x(t) + B_2 d(t) + B_3 u(t)$$
$$\widetilde{F}_T(t) = C_3(\theta(t))x(t)$$
$$\qquad\qquad [7]$$

where

$$A(\theta(t)) = A_1 + B_1 \widetilde{k}(\theta(t))C_1$$
$$C_3(\theta(t)) = C_1(\widetilde{k}(\theta(t)) + k_0) + C_2$$
$$\qquad\qquad [8]$$

where the first term in the expression for $C_3$ corresponds to the force in the bushing and the last term to the actuator force output $F_A(t)$(i.e. $F_A(t)=C_2 x(t)$).

To emphasize the difference in response between the non-linear system and a linear model approximation, a linearization around static equilibrium of [6] is introduced as

$$\dot{x}(t) = A_I x(t) + B_{1I} d(t) + B_{2I} u(t)$$
$$\overline{F}_T(t) = C_I x(t)$$

[9]

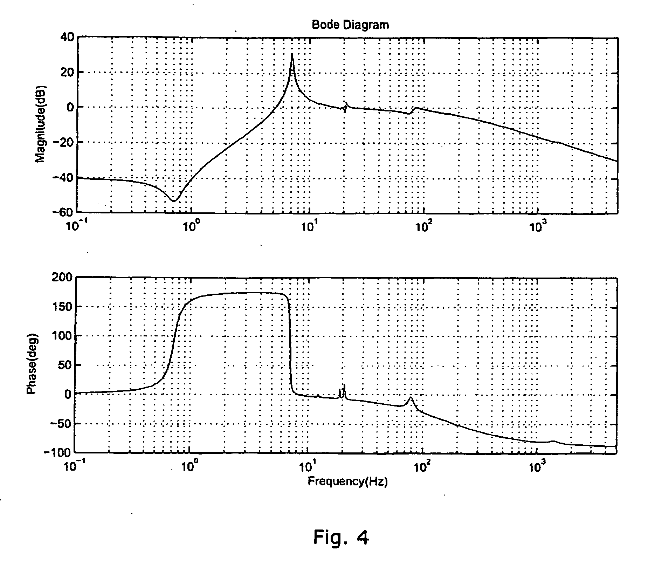

Figure 4 illustrates schematically a transfer function corresponding to a linearization of the equation of motions relating $u(t)$ and the total force $F_T(t)$ transmitted to subframe in the global $x$-direction. Figure 4 shows a Bode diagram of the system [9] from force actuator input $u(s)$ to the total transmitted force $\overline{F}_T(s)$ ($s$ denoting the Laplace variable). The high frequency roll-off is due to the low-pass characteristics of the actuator.

In order to validate the accuracy of the LPV-representation [7], simulations have been carried out with a transient load case corresponding to a rapid acceleration including a gear shift operation for the following three models;

The Non-linear model [6] integrated using ADAMS (MSC.ADAMS. A registered trademark of MSC.Software Corporation., 2 MacArthur Place, Santa Ana, CA 92707, USA.)

The LPV-model [7] integrated using Matlab/Simulink

The linear model [9] integrated using Matlab/Simulink.

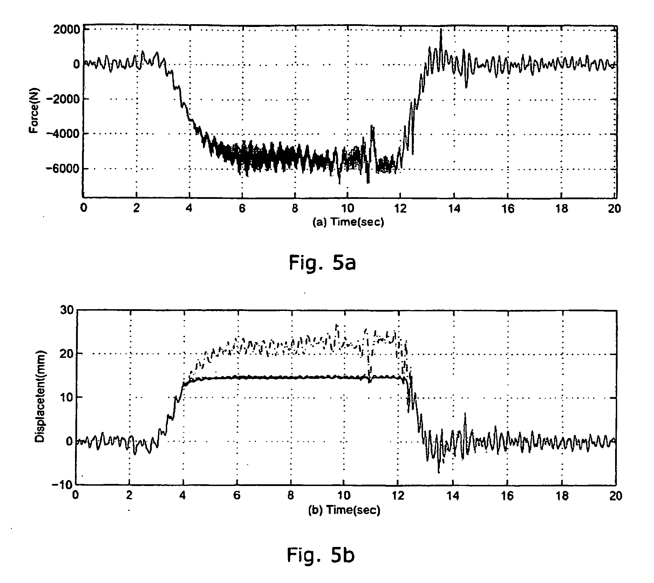

Figure 5a presents $F_T(t)$ corresponding to the non-linear system [6] and Figure 5b shows the displacement $l(t)$ of the bushing $B_1$ corresponding to the three models.

Considering Figure 3, this load case implies operation in the non-linear stiffness region of the bushing $B_i$. The response of the LPV model and the non-linear model show high conformity while the displacement answering to the linear approximation (computed as $l(t)=C_1 x(t)$) deviates substantially.

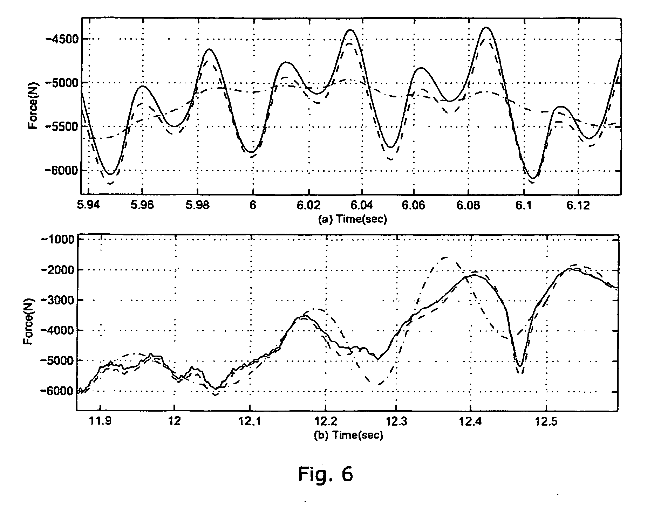

Figure 6 shows $F_T(t)$, $\tilde{F}_T(t)$, and $\overline{F}_T(t)$ corresponding to the same simulation focusing on two different time intervals for visibility. Both static level and dynamic content of $\tilde{F}_T(t)$ answers very well to the response $F_T(t)$ of the non-linear model. The linear model [9] offers a poor approximation $\overline{F}_T(t)$ of the total transmitted force $F_T(t)$.

The active engine vibration isolation system is required to deal with all sorts of engine excitation including the ones corresponding to rapid car accelerations. This requires the controller to deal with rapidly changing excitation frequency contents as well as system non-linearity.

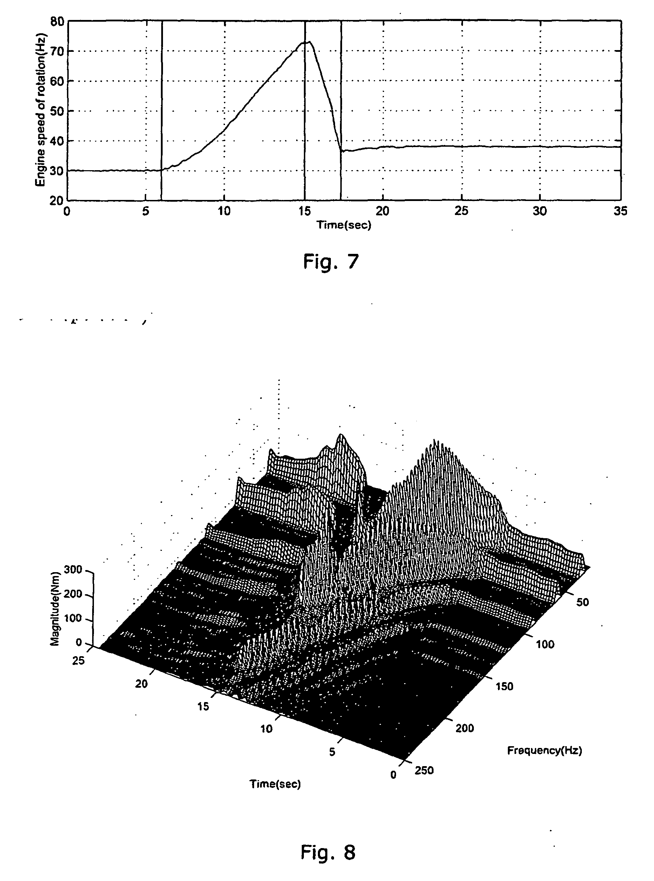

Figure 7 shows the engine speed corresponding to a rapid car acceleration on 3rd gear including a gear shifting operation to the 5th gear. Maximum engine rotational speed change is approximately 360 rpm/second (without considering the engine speed variation during the actual gear shift operation).

Figure 8 illustrates schematically the time-dependent frequency contents of the $T_x$-torque corresponding to the above acceleration and gear shift operation. Figure 8 shows the corresponding torque $T_X(t)$ applied to the engine body at the engine centre of gravity around the engine coordinate system $x$-axis. (See Figure 2 for definition of $T_X(t)$ and the engine coordinate system).

A controller relying on the SDRE- (state-dependent Riccati equation) technique has been developed based on the LPV-model [7]. (For further information on the SDRE-technique reference is made to J. R. Cloutier, C. N. D'Souza, and C. P. Mracek. "Nonlinear regulation and nonlinear H∞ control via the state-dependent riccati equation technique." First International Conference on Nonlinear Problems in Aviation and Aerospace, Daytona Beach, Florida, May 1996.). In addition, knowledge about the disturbance characteristics being dominated by the first three engine orders has been taken into account using disturbance modeling.

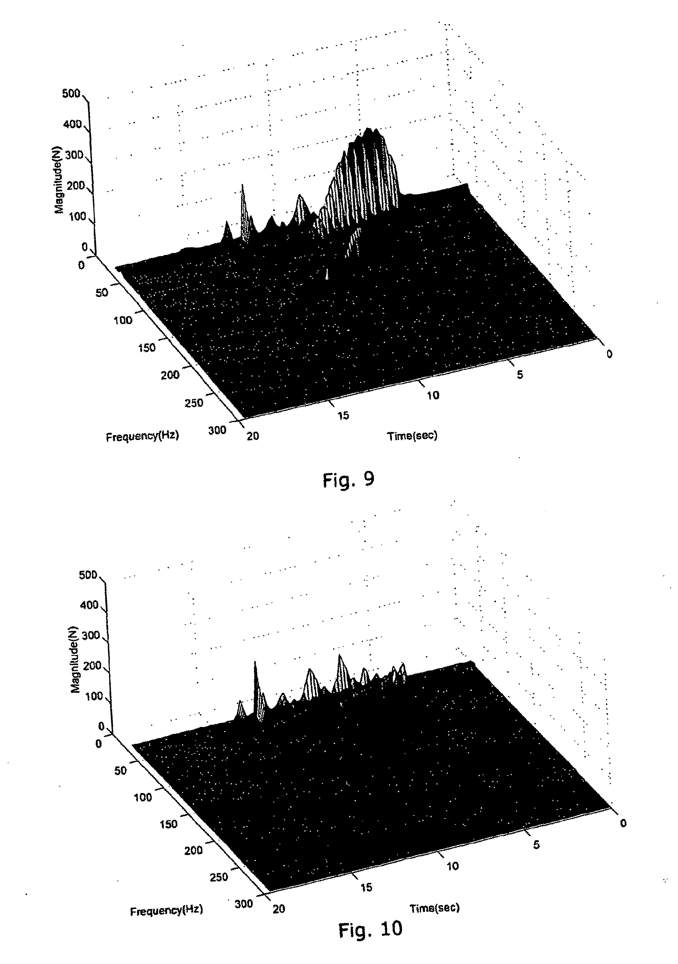

The results from the simulation evaluations where the response to the controller action and the internal engine excitation has been obtained are very good. Figures 9 and 10 show the magnitude of the total force transmitted to the subframe in the global $x$-direction, without and with control, respectively.

Figure 9 illustrates the total force $F_T(t)$ transmitted to subframe in the global $x$-direction corresponding to an open loop simulation (i.e. without control) of the response to the transient excitation (answering to Figure 5).

Figure 10 illustrates the total force $F_T(t)$ transmitted to subframe in the global $x$-direction corresponding to a closed loop simulation (i.e. with control) of the response to the transient excitation (answering to Figure 5).

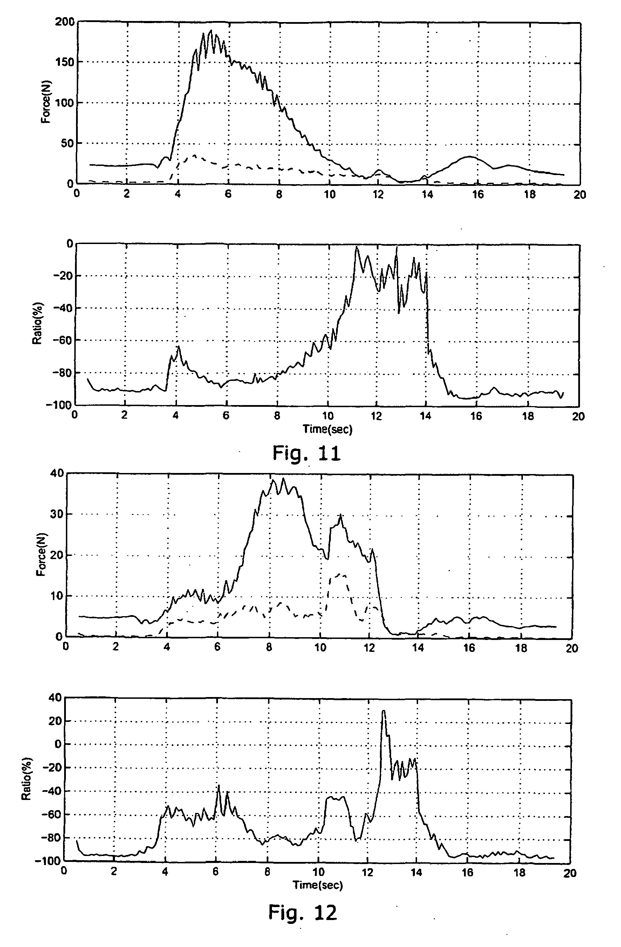

The attenuation of the excitation corresponding to the 1st, 2nd, and 3rd engine order is shown in Figures 11-13. Clearly, this control strategy provides attenuation of the transmitted force when dealing with the transient excitation corresponding to a rapid car acceleration as well as system non-linearity.

In figure 11 is shown the frequency component corresponding to the 1st engine order of the total force $F_T(t)$ transmitted to subframe in the global $x$-direction corresponding to a simulation of the response to the transient excitation (answering to Figure 5). In the upper graph, the solid line corresponds to open-loop and the dashed line to closed-loop (i.e. with control). The lower graph shows the attenuation expressed in percent where 0% means no attenuation and -100% implies perfect attenuation (zero transmitted force).

Figure 12 corresponds to figure 11 but for the 2nd order.

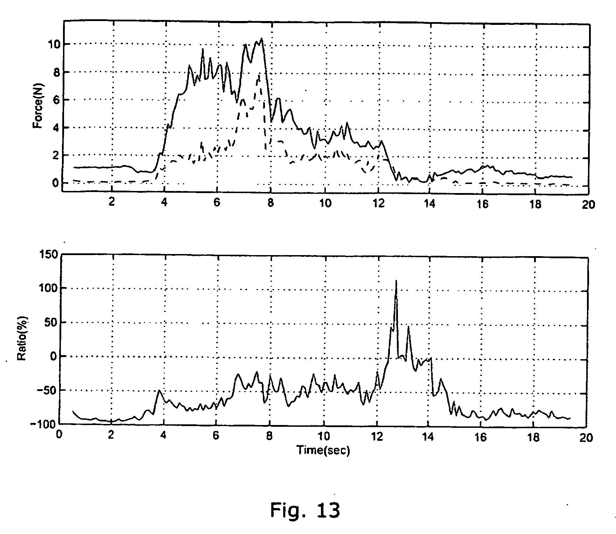

Figure 13 also corresponds to figure 11 but for the 3rd order.

Compared to previous attempts to by the same inventor to deal with this problem, as indicated in the background of the invention section above, the problems with insufficient tracking and instability due to non-linear model perturbations have now been solved.

The above described linear parameter varying model is used to configure an actuator controller and the actuator controller is thereafter used to control one or more actuators to generate a respective force output for canceling the vibration induced forces generated by the non-linear dynamic system.

In addition to the application proposed above the method in accordance with the present invention is also suitable for analyzing the properties of the closed system.

The present invention also relates to an automotive vehicle comprising a system for providing active vibration isolation of a non-linear dynamic system in the automotive vehicle.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

**Claims**

1. A method for providing active vibration isolation of a non-linear dynamic system in an automotive vehicle comprising the steps of:

   a) building an implicit, arbitrarily detailed multi-body simulation model of the non-linear dynamic system to be isolated;
   b) identifying non-linear elements to be extracted/isolated;
   c) modeling the non-linear element as a linear one in parallel with a non-linear parameter dependent element;
   d) considering the non-linear parameter dependent element as an 'input' and the parameter as an 'output' and computing a linear analytical model representing this input/output relation;
   e) substituting the model 'input' by a corresponding parameter dependent expression utilizing the 'output', yielding a linear parameter varying model of the non linear system suitable for control synthesis;
   f) using the linear parameter varying model of the non linear system for the synthesis of an actuator controller;
   g) using the actuator controller to control one or more actuators to generate a respective force output for canceling any vibration induced forces generated by the non-linear dynamic system.

2. A method for providing active vibration isolation of a non-linear dynamic system in an automotive vehicle according to claim 1,
   **characterized in that** the step of modeling the non-linear element as a linear one in parallel with a non-linear parameter dependent element where the parameter is measurable or observable.

3. A method for providing active vibration isolation of a non-linear dynamic system in an automotive vehicle according to any one of claims 1 or 2,
   **characterized in that**
   the step of building an implicit, arbitrarily detailed multi-body simulation model of the non-linear dynamic system to be controlled where the dynamics of this system is described by a first order non-linear differential equation as:

$$\dot{x}(t) = g(x(t), d(t))$$

where $x(t) \in R^n$ is the state of the system, $d(t) \in R^m$ is an external disturbance/input, and $g(\cdot)$ is a non-linear function; in the step of modeling the non-linear element as a linear one in parallel with a non-linear parameter dependent element, the non-linear parameter dependent element is designated $\tilde{E}_{NL}(\theta(t))$, which renders

$$\widetilde{E}_{NL}(\theta(t))z(t), z(t) = Cx(t)$$

where the parameter $\theta(t) \in R^p$ is measurable or observable, and the possibly non-linear matrix function $E_{NL}(\theta(t))$ must depend linearly on the state of the system;

in the step of considering the non-linear parameter dependent element as an 'input' and the parameter as an 'output' and computing a linear analytical model representing this input/output relation, the signal $z(t)$ is considered as the 'output' and a linear state-space model representation is computed as

$$\dot{x}(t) = Ax(t) + B_1 E_{NL}(\theta(t))z(t) + B_2 d(t)$$

$$z(t) = Cx(t)$$

in the step of substituting the model 'input' by a corresponding parameter dependent expression utilizing the 'output', yielding a linear parameter varying model of the non linear system suitable for control synthesis, the signal $z(t)$ is substituted in the dynamic equation with $z(t)=Cx(t)$, yielding a linear parameter varying model of the non-linear system described by

$$\dot{x}(t) = A(\theta(t))x(t) + B_2 d(t)$$

where

$$A(\theta(t)) = A + B_1 E_{NL}(\theta(t))C .$$

**4.** A system for providing active vibration isolation of a non-linear dynamic system in an automotive vehicle, **characterized in that** it comprises at least one actuator controller the controller synthesis of which is based on a linear parameter varying model of the non linear system, and at least one associated actuator arranged to act between the non-linear dynamic system and a body of the automotive vehicle, where the at least one actuator controller is arranged to control one or more of the associated actuators to generate a respective force output for canceling any vibration induced forces generated by the non-linear dynamic system, wherein the controlled synthesis is based on a linear parameter varying model of the non linear system the assembly of which is based on the following method steps:

a) building an implicit, arbitrarily detailed multi-body simulation model of the non-linear dynamic system to be isolated;
b) identifying non-linear elements to be extracted/isolated;
c) modeling the non-linear element as a linear one in parallel with a non-linear parameter dependent element;
d) considering the non-linear parameter dependent element as an 'input' and the parameter as an 'output' and computing a linear analytical model representing this input/output relation;
e) substituting the model 'input' by a corresponding parameter dependent expression utilizing the 'output', yielding a linear parameter varying model of the non linear system suitable for control synthesis;

**5.** A system for providing active vibration isolation of a non-linear dynamic system in an automotive vehicle according to claims 4, **characterized in that** in the method steps for controller synthesis further the step of modeling the non-linear element as a linear one in parallel with a non-linear parameter dependent element where the parameter is measurable or observable.

**6.** A system for providing active vibration isolation of a non-linear dynamic system in an automotive vehicle according to claim 5,
**characterized in that** in the method steps for controller synthesis further:

the step of building an implicit, arbitrarily detailed multi-body simulation model of the non-linear dynamic system to be controlled where the dynamics of this system is described by a first order non-linear differential equation as:

$$\dot{x}(t) = g(x(t), d(t))$$

where $x(t) \in R^n$ is the state of the system, $d(t) \in R^m$ is an external disturbance/input, and $g(\cdot)$ is a non-linear function; in the step of modeling the non-linear element as a linear one in parallel with a non-linear parameter dependent element, the non-linear parameter dependent element is designated $\tilde{E}_{NL}(\theta(t))$, which renders

$$\tilde{E}_{NL}(\theta(t))z(t), z(t) = Cx(t)$$

where the parameter $\theta(t) \in R^p$ is measurable or observable, and the possibly non-linear matrix function $E_{NL}(\theta(t))$ must depend linearly on the state of the system; in the step of considering the non-linear parameter dependent element as an 'input' and the parameter as an 'output' and computing a linear analytical model representing this input/output relation, the signal $z(t)$ is considered as the 'output' and a linear state-space model representation is computed as

$$\dot{x}(t) = Ax(t) + B_1 E_{NL}(\theta(t))z(t) + B_2 d(t)$$

$$z(t) = Cx(t)$$

in the step of substituting the model 'input' by a corresponding parameter dependent expression utilizing the 'output', yielding a linear parameter varying model of the non linear system suitable for control synthesis, the signal $z(t)$ is substituted in the dynamic equation with $z(t)=Cx(t)$, yielding a linear parameter varying model of the non-linear system described by

$$\dot{x}(t) = A(\theta(t))x(t) + B_2 d(t)$$

where

$$A(\theta(t)) = A + B_1 E_{NL}(\theta(t))C \ .$$

7. An automotive vehicle, **characterized in that** it comprises a system for providing active vibration isolation of a non-linear dynamic system in an automotive vehicle according to any one of claims 4 to 6.

**Patentansprüche**

1. Verfahren zum Schaffen einer aktiven Schwingungsisolation eines nichtlinearen dynamischen Systems in einem Kraftfahrzeug, das die folgenden Schritte umfasst:

a) Bilden eines impliziten, beliebig genauen Mehrkörper-Simulationsmodells des nichtlinearen dynamischen Systems, das isoliert werden soll;
b) Identifizieren nichtlinearer Elemente, die extrahiert/isoliert werden sollen;

c) Modellieren des nichtlinearen Elements als ein lineares Element parallel zu einem nichtlinearen parameterabhängigen Element;

d) Betrachten des nichtlinearen parameterabhängigen Elements als einen "Eingang" und des Parameters als einen "Ausgang" und Berechnen eines linearen analytischen Modells, das diese Eingangs/Ausgangs-Beziehung repräsentiert;

e) Substituieren des Modells "Eingang" durch einen entsprechenden parameterabhängigen Ausdruck unter Verwendung des "Ausgangs", was ein lineares parameterveränderliches Modell des nichtlinearen Systems ergibt, das für eine Steuersynthese geeignet ist;

f) Verwenden des linearen parameterveränderlichen Modells des nichtlinearen Systems für die Synthese einer Aktor-Steuereinheit;

g) Verwenden der Aktor-Steuereinheit, um einen oder mehrere Aktoren zu steuern, um einen jeweiligen Kraftausgang zu erzeugen, um jegliche schwingungsinduzierten Kräfte, die durch das nichtlineare dynamische System erzeugt werden, aufzuheben.

2. Verfahren zum Schaffen einer aktiven Schwingungsisolation eines nichtlinearen dynamischen Systems in einem Kraftfahrzeug nach Anspruch 1,
**dadurch gekennzeichnet, dass** in dem Schritt des Modellierens des nichtlinearen Elements als ein lineares Element parallel zu einem nichtlinearen parameterabhängigen Element der Parameter messbar oder beobachtbar ist.

3. Verfahren zum Schaffen einer aktiven Schwingungsisolation eines nichtlinearen dynamischen Systems in einem Kraftfahrzeug nach einem der Ansprüche 1 oder 2,
**dadurch gekennzeichnet, dass**
in dem Schritt des Bildens eines impliziten, beliebig genauen Mehrkörper-Simulationsmodells des nichtlinearen dynamischen Systems, das gesteuert werden soll, die Dynamik dieses Systems durch eine nichtlineare Differentialgleichung erster Ordnung beschrieben wird, nämlich:

$$\dot{x}(t) = g(x(t), d(t)),$$

wobei $x(t) \in R^n$ der Zustand des Systems ist, $d(t) \in R^m$ eine äußere Störung/ein Eingang ist und $g(\cdot)$ eine nichtlineare Funktion ist;

in dem Schritt des Modellierens des nichtlinearen Elements als ein lineares Element parallel zu einem nichtlinearen parameterabhängigen Element das nichtlineare parameterabhängige Element mit $\tilde{E}_{NL}(\theta(t))$ bezeichnet wird, was ergibt:

$$\tilde{\tilde{E}}_{NL}(\theta(t))z(t), z(t) = Cx(t)$$

wobei der Parameter $\theta(t) \in R^p$ messbar oder beobachtbar ist und die möglicherweise nichtlineare Matrixfunktion $E_{NL}(\theta(t))$ vom Zustand des Systems linear abhängen muss;

im Schritt des Betrachtens des nichtlinearen parameterabhängigen Elements als einen "Eingang" und des Parameters als einen "Ausgang" und des Berechnens eines linearen analytischen Modells, das diese Eingangs/Ausgangs-Beziehung repräsentiert, das Signal $z(t)$ als der "Ausgang" betrachtet wird und die Darstellung eines linearen Zustandsraum-Modells folgendermaßen berechnet wird

$$\dot{x}(t) = Ax(t) + B_1 E_{NL}(\theta(t))z(t) + B_2 d(t)$$

$$z(t) = Cx(t)$$

im Schritt des Substituierens des Modells "Eingang" durch einen entsprechenden parameterabhängigen Ausdruck unter Verwendung des "Ausgangs", was ein lineares parameterveränderliches Modell des nichtlinearen Systems, das für die Steuersynthese geeignet ist, ergibt, das Signal $z(t)$ in der dynamischen Gleichung substituiert wird gemäß

$z(t) = Cx(t),$ was ein lineares parameterveränderliches Modell des nichtlinearen Systems ergibt, das beschrieben wird durch:

$$\dot{x}(t) = A(\theta(t))x(t) + B_2 d(t)$$

wobei

$$A(\theta(t)) = A + B_1 E_{NL}(\theta(t))C.$$

**4.** System zum Schaffen einer aktiven Schwingungsisolation eines nichtlinearen dynamischen Systems in einem Kraftfahrzeug, **dadurch gekennzeichnet, dass** es umfasst: mindestens eine Aktor-Steuereinheit, wobei die Synthese der Steuereinheit auf einem linearen parameterveränderlichen Modell des nichtlinearen Systems basiert, und mindestens einen zugeordneten Aktor, der dazu ausgelegt ist, zwischen dem nichtlinearen dynamischen System und einem Körper des Kraftfahrzeugs zu wirken, wobei die mindestens eine Aktor-Steuereinheit dazu ausgelegt ist, einen oder mehrere der zugeordneten Aktoren zu steuern, um einen jeweiligen Kraftausgang zu erzeugen, um jegliche schwingungsinduzierten Kräfte, die durch das nichtlineare dynamische System erzeugt werden, aufzuheben, wobei
die Synthese der Steuereinheit auf einem linearen parameterveränderlichen Modell des nichtlinearen Systems basiert, dessen Bildung auf den folgenden Verfahrensschritten basiert:

    a) Bilden eines impliziten, beliebig genauen Mehrkörper-Simulationsmodells des nichtlinearen dynamischen Systems, das isoliert werden soll;
    b) Identifizieren nichtlinearer Elemente, die extrahiert/isoliert werden sollen;
    c) Modellieren des nichtlinearen Elements als ein lineares Element parallel zu dem nichtlinearen parameterabhängigen Element;
    d) Betrachten des nichtlinearen parameterabhängigen Elements als einen "Eingang" und des Parameters als einen "Ausgang" und Berechnen eines linearen analytischen Modells, das diese Eingangs/Ausgangs-Beziehung repräsentiert;
    e) Substituieren des Modells "Eingang" durch einen entsprechenden parameterabhängigen Ausdruck unter Verwendung des "Ausgangs", was ein lineares parameterveränderliches Modell des nichtlinearen Systems, das für die Steuersynthese geeignet ist, ergibt.

**5.** System zum Schaffen einer aktiven Schwingungsisolation eines nichtlinearen dynamischen Systems in einem Kraftfahrzeug nach Anspruch 4,
**dadurch gekennzeichnet, dass** in den Verfahrensschritten für die Steuereinheit-Synthese ferner in dem Schritt des Modellierens des nichtlinearen Elements als ein lineares Element parallel zu einem nichtlinearen parameterabhängigen Element der Parameter messbar oder beobachtbar ist.

**6.** System zum Schaffen einer aktiven Schwingungsisolation eines nichtlinearen dynamischen Systems in einem Kraftfahrzeug nach Anspruch 5,
**dadurch gekennzeichnet, dass** in den Verfahrensschritten für die Steuereinheit-Synthese ferner:

    in dem Schritt des Bildens eines impliziten, beliebig genauen Mehrkörper-Simulationsmodells des nichtlinearen dynamischen Systems, das gesteuert werden soll, die Dynamik dieses Systems durch eine nichtlineare Differentialgleichung erster Ordnung beschrieben wird, nämlich:

$$\dot{x}(t) = g(x(t), d(t)),$$

    wobei $x(t) \in R^n$ der Zustand des Systems ist, $d(t) \in R^m$ eine äußere Störung/ein Eingang ist und $g(\cdot)$ eine nichtlineare Funktion ist;
    in dem Schritt des Modellierens des nichtlinearen Elements als ein lineares Element parallel zu einem nichtlinearen parameterabhängigen Element das nichtlineare parameterabhängige Element mit $\tilde{E}_{NL}(\theta(t))$ bezeichnet

wird, was ergibt:

$$\tilde{E}_{NL}(\theta(t))z(t),\, z(t) = Cx(t)$$

wobei der Parameter $\theta(t)\in R^p$ messbar oder beobachtbar ist und die möglicherweise nichtlineare Matrixfunktion $E_{NL}(\theta(t))$ vom Zustand des Systems linear abhängen muss;

im Schritt des Betrachtens des nichtlinearen parameterabhängigen Elements als einen "Eingang" und des Parameters als einen "Ausgang" und des Berechnens eines linearen analytischen Modells, das diese Eingangs/ Ausgangs-Beziehung repräsentiert, das Signal $z(t)$ als der "Ausgang" betrachtet wird und die Darstellung eines linearen Zustandsraum-Modells folgendermaßen berechnet wird

$$\dot{x}(t) = Ax(t) + B_1 E_{NL}(\theta(t))z(t) + B_2 d(t)$$

$$z(t) = Cx(t)$$

im Schritt des Substituierens des Modells "Eingang" durch einen entsprechenden parameterabhängigen Ausdruck unter Verwendung des "Ausgangs", was ein lineares parameterveränderliches Modell des nichtlinearen Systems, das für die Steuersynthese geeignet ist, ergibt, das Signal $z(t)$ in der dynamischen Gleichung substituiert wird gemäß $z(t) = Cx(t)$, was ein lineares parameterveränderliches Modell des nichtlinearen Systems ergibt, das beschrieben wird durch:

$$\dot{x}(t) = A(\theta(t))x(t) + B_2 d(t)$$

wobei

$$A(\theta(t)) = A + B_1 E_{NL}(\theta(t))C\,.$$

7. Kraftfahrzeug, **dadurch gekennzeichnet, dass** es ein System zum Schaffen einer aktiven Schwingungsisolation eines nichtlinearen dynamischen Systems in einem Kraftfahrzeug nach einem der Ansprüche 4 bis 6 umfasst.

**Revendications**

1. Procédé pour assurer une isolation active des vibrations d'un système dynamique non linéaire dans un véhicule automobile comprenant les étapes suivantes :

a) construire un modèle implicite arbitrairement détaillé de simulation multichâssis du système dynamique non linéaire à isoler ;
b) identifier des éléments non linéaires à extraire/isoler ;
c) modéliser l'élément non linéaire en tant qu'élément linéaire en parallèle avec un élément dépendant d'un paramètre non linéaire ;
d) considérer l'élément dépendant d'un paramètre non linéaire comme une entrée et le paramètre comme une sortie et calculer un modèle analytique linéaire représentant cette relation d'entrée/sortie ;
e) substituer l'entrée du modèle par une expression correspondante dépendant d'un paramètre utilisant la sortie, ce qui donne un modèle variant avec un paramètre linéaire du système non linéaire approprié pour une synthèse de contrôle ;
f) utiliser le modèle variant avec un paramètre linéaire du système non linéaire pour la synthèse d'un contrôleur d'actionneur ;

g) utiliser le contrôleur d'actionneur pour commander à un ou plusieurs actionneurs de générer une sortie de force respective pour annuler les forces induites par les vibrations générées par le système dynamique non linéaire.

2. Procédé pour assurer une isolation active des vibrations d'un système dynamique non linéaire dans un véhicule automobile selon la revendication 1,
**caractérisé en ce que,** à l'étape de modélisation de l'élément non linéaire en tant qu'élément linéaire en parallèle avec un élément dépendant d'un paramètre non linéaire, le paramètre est mesurable ou observable.

3. Procédé pour assurer une isolation active des vibrations d'un système dynamique non linéaire dans un véhicule automobile selon l'une quelconque des revendications 1 ou 2,
**caractérisé en ce que**
à l'étape de construction d'un modèle implicite arbitrairement détaillé de simulation multichâssis du système dynamique non linéaire à commander, la dynamique de ce système est décrite par une équation différentielle non linéaire de premier ordre telle que :

$$x(t) = g(x(t), d(t))$$

où $x(t) \in R^n$ est l'état du système, $d(t) \in R^m$ est une perturbation/entrée externe, et g(.) est une fonction non linéaire ;
à l'étape de modélisation de l'élément non linéaire en tant qu'élément linéaire en parallèle avec un élément dépendant d'un paramètre non linéaire, l'élément dépendant d'un paramètre non linéaire est désigné par $\tilde{E}_{NL}(\theta(t))$, ce qui donne:

$$\tilde{E}_{NL}\big(\theta(t)\big)z(t), z(t) = Cx(t)$$

où le paramètre $\theta(t) \in R^p$ est mesurable ou observable, et la fonction de matrice éventuellement non linéaire $E_{NL}(\theta(t))$ doit dépendre linéairement de l'état du système ;
à l'étape consistant à considérer l'élément dépendant du paramètre non linéaire comme une entrée et le paramètre comme une sortie et à calculer un modèle analytique linéaire représentant cette relation d'entrée/sortie, le signal z(t) est considéré comme la sortie et une représentation de modèle état-espace linéaire est calculée en tant que :

$$x(t) = Ax(t) + B_1 E_{NL}\big(\theta(t)\big)z(t) + B_2 d(t)$$

$$z(t) = Cx(t)$$

à l'étape consistant à substituer à l'entrée du modèle une expression correspondante dépendant d'un paramètre utilisant la sortie, ce qui donne un modèle variant avec un paramètre linéaire du système non linéaire approprié pour une synthèse de contrôle, le signal z(t) est remplacé dans l'équation dynamique par z(t) = Cx(t), en donnant un modèle variant avec un paramètre linéaire du système non linéaire décrit par

$$x(t) = A\big(\theta(t)\big)x(t) + B_2 d(t)$$

où

$$A\big(\theta(t)\big) = A + B_1 E_{NL}\big(\theta(t)\big)C.$$

4. Système pour assurer une isolation active des vibrations d'un système dynamique non linéaire dans un véhicule automobile,
**caractérisé en ce qu'**il comprend au moins un contrôleur d'actionneur dont la synthèse de contrôleur est basée sur un modèle variant avec un paramètre linéaire du système non linéaire, et au moins un actionneur associé agencé pour agir entre le système dynamique non linéaire et un châssis du véhicule automobile, où l'au moins un contrôleur d'actionneur est agencé pour commander un ou plusieurs des actionneurs associés pour générer une sortie de force respective pour annuler les forces induites de vibrations générées par le système dynamique non linéaire, dans lequel la synthèse de contrôleur est basée sur un modèle variant avec un paramètre linéaire du système non linéaire dont l'assemblage est basé sur les étapes de procédé suivantes :

a) construire un modèle implicite arbitrairement détaillé de simulation multichâssis du système dynamique non linéaire à isoler ;
b) identifier des éléments non linéaires à extraire/isoler ;
c) modéliser l'élément non linéaire en tant qu'élément linéaire en parallèle avec un élément dépendant d'un paramètre non linéaire ;
d) considérer l'élément dépendant d'un paramètre non linéaire comme une entrée et le paramètre comme une sortie et calculer un modèle analytique linéaire représentant cette relation d'entrée/sortie ;
e) substituer à l'entrée de modèle une expression correspondante dépendant d'un paramètre utilisant la sortie, ce qui donne un modèle variant avec un paramètre linéaire du système non linéaire approprié pour une synthèse de contrôle.

5. Système pour assurer une isolation active des vibrations d'un système dynamique non linéaire dans un véhicule automobile selon la revendication 4,
**caractérisé en ce que,** à l'étape de procédé pour la synthèse de contrôleur consistant à modéliser l'élément non linéaire en tant qu'élément linéaire en parallèle avec un élément dépendant d'un paramètre non linéaire, le paramètre est mesurable ou observable.

6. Système pour assurer une isolation active des vibrations d'un système dynamique non linéaire dans un véhicule automobile selon la revendication 5,
**caractérisé en ce que** dans les étapes de procédé pour la synthèse de contrôleur en outre :

à l'étape de construction d'un modèle implicite arbitrairement détaillé de simulation multichâssis du système dynamique non linéaire à commander, la dynamique de ce système est décrite par une équation différentielle non linéaire de premier ordre telle que :

$$x(t) = g(x(t),d(t))$$

où $x(t) \in R^n$ est l'état du système, $d(t) \in R^m$ est une perturbation/entrée externe, et g(.) est une fonction non linéaire ;
à l'étape de modélisation de l'élément non linéaire en tant qu'élément linéaire en parallèle avec un élément dépendant d'un paramètre non linéaire, l'élément dépendant d'un paramètre non linéaire est désigné par $\tilde{E}_{NL}(\theta(t))$, ce qui donne :

$$\tilde{E}_{NL}\big(\theta(t)\big)z(t), z(t) = Cx(t)$$

où le paramètre $\theta(t) \in R^p$ est mesurable ou observable, et la fonction de matrice éventuellement non linéaire $E_{NL}(\theta(t))$ doit dépendre linéairement de l'état du système ;
à l'étape consistant à considérer l'élément dépendant du paramètre non linéaire comme une entrée et le paramètre comme une sortie et à calculer un modèle analytique linéaire représentant cette relation d'entrée/sortie, le signal z(t) est considéré comme la sortie et une représentation de modèle état-espace linéaire est calculée en tant que :

$$x(t) = Ax(t) + B_1 E_{NL}\big(\theta(t)\big)z(t) + B_2 d(t)$$

$$z(t) = Cx(t)$$

à l'étape consistant à substituer à l'entrée du modèle une expression correspondante dépendant d'un paramètre utilisant la sortie, ce qui donne un modèle variant avec un paramètre linéaire du système non linéaire approprié pour une synthèse de contrôle, le signal z(t) est remplacé dans l'équation dynamique par z(t) = Cx(t), donnant un modèle variant avec un paramètre linéaire du système non linéaire décrit par

$$x(t) = A\big(\theta(t)\big)x(t) + B_2 d(t)$$

où

$$A\big(\theta(t)\big) = A + B_1 E_{NL}\big(\theta(t)\big)C.$$

7. Véhicule automobile **caractérisé en ce qu'**il comprend un système pour assurer une isolation active des vibrations d'un système dynamique non linéaire dans un véhicule automobile selon l'une quelconque des revendications 4 à 6.

Fig. 1a

Fig. 1b

Fig. 2

Fig. 3a

Fig. 3b

Fig. 4

Fig. 5a

Fig. 5b

Fig. 6

Fig. 7

Fig. 8

Fig. 9

Fig. 10

Fig. 11

Fig. 12

Fig. 13

## REFERENCES CITED IN THE DESCRIPTION

### Non-patent literature cited in the description

- **B. WIDROW ; S. D. STEARNS.** Adaptive Signal Processing. Prentice Hall, 1985
- **V. N. SOHONI ; J. WHITESELL.** Automatic linearization of constrained dynamical models. *Transactions of the ASME,* September 1986, vol. 108
- **J. R. CLOUTIER ; C. N. D'SOUZA ; C. P. MRACEK.** Nonlinear regulation and nonlinear H∞ control via the state-dependent riccati equation technique. *First International Conference on Nonlinear Problems in Aviation and Aerospace,* May 1996